# EUROPÄISCHE PATENTSCHRIFT

(11) **EP 0 797 168 B1**
(45) Veröffentlichungstag und Bekanntmachung des Hinweises auf die Patenterteilung: **02.06.2004**
(21) Anmeldenummer: 97102082.1
(22) Anmeldetag: 10.02.1997
(51) Int. Cl.: G06K 19/06, G06K 7/10

(54) **Vorrichtung zum Identifizieren von Objekten**
A device for identifying objects
Dispositif d'identification d'objets

(30) Priorität: 23.03.1996 DE 19611579
(43) Veröffentlichungstag der Anmeldung: 24.09.1997
(73) Patentinhaber: Bayerische Motoren Werke Aktiengesellschaft, 80788 München (DE)
(72) Erfinder: Weber, Wolfgang, 93155 Hemau (DE); Bachhuber, Manfred, 93326 Abensberg (DE)

(56) Entgegenhaltungen:
- US-A- 4 770 122
- US-A- 4 947 335
- US-A- 5 321 619

## Beschreibung

Die Erfindung bezieht sich auf eine Vorrichtung mit den Merkmalen des Oberbegriffs von Patentanspruch 1.

Diese Merkmale des Oberbegriffs sind beispielsweise in US-A-4 770 122 oder auch in US-A-4 947 335 offenbart.

Im Rahmen der Herstellung eines Fahrzeugs ist es bekannt, den Markierungsträger in der Fahrzeugkarosserie einzuhängen. Die Karosserie durchläuft verschiedene Lackbehandlungen. Sie wird dabei auch vollständig in Lackbäder eingetaucht. Daran an schließen sich Trocknungsvorgänge, bei denen die Karosserie auf Temperaturen von beispielsweise 180°C erwärmt wird.

Die Handhabung des Markierungsträgers bei der bekannten Vorrichtung ist aufwendig, da der Markierungsträger vor der Lackbehandlung eingehängt und anschließend wieder aus dem Fahrzeug entnommen werden muß. Auch besteht die Gefahr eines Verdrehens, wodurch es für eine Leseeinrichtung nicht oder nicht ohne weiteres möglich ist, den Markierungsträger zu identifizieren. Schließlich ist die Leseeinrichtung auch im Arbeitsbereich angeordnet. Die optische Verbindung zwischen Markierungsträger und Leseeinrichtung kann durch Gegenstände im Blickfeld der Leseeinrichtung unterbrochen werden. Da i.d.R. mehrere Leseeinrichtungen während der verschiedenen Bearbeitungsvorgänge eingesetzt sind, die dann möglicherweise alle oder teilweise nicht wirksam sein können, ergibt sich dadurch die Gefahr einer nicht ausreichenden Kontrolle des jeweiligen Fahrzeugs während der gesamten Bearbeitungsvorgänge.

Der Erfindung liegt die Aufgabe zugrunde, eine Vorrichtung der eingangs genannten Art zu schaffen, die auf konstruktiv einfache Weise eine sichere Erkennung des Markierungsträgers bei einfacher Handhabung ermöglicht.

Die Erfindung löst diese Aufgabe durch die kennzeichnenden Merkmale des Patentanspruchs 1.

Durch die Anordnung der Leseeinrichtung im Boden der Förderbahn wird die Gefahr einer unbeabsichtigten Unterbrechung der optischen Verbindung zwischen Markierungsträger und Leseeinrichtung ausgeschlossen. Gleichzeitig wird durch die starre Befestigung des Markierungsträgers am Aufnehmer eine richtige optische Zuordnung zur Leseeinrichtung erreicht. Die feste Verbindung mit dem Aufnehmer macht ein besonderes Handling des Markierungsträgers überflüssig. Dieser wird vielmehr stets mit dem Aufnehmer bewegt und zugleich mit diesem beispielsweise auch einer Nachbehandlung in Form einer Entlackung unterzogen. Es versteht sich von selbst, daß ein derartiger Markierungsträger mechanisch besonders widerstandsfähig ist.

Bei der Leseeinrichtung kann es sich vorzugsweise um eine Kamera mit nachgeschalteter Bildverarbeitungseinrichtung handeln. Alternativ kann es sich um einen Barcodeleser handeln, sofern die Markierungsträger mit einem Barcode versehen ist.

Die Verwendung einer Kamera ist noch insoweit vorteilhaft, als der Markierungsträger in besonders einfacher Weise als Blech ausgebildet sein kann, das mit einem Lochcode versehen ist. Die Bildverarbeitungseinrichtung kann dann als handelsübliche Decodiereinrichtung für beispielsweise einen nach einem Standardverfahren erzeugten Lochcode ausgebildet sein.

Zur Verbesserung der optischen Abtastung des Markierungsträgers kann im Boden der Förderbahn zusätzlich eine Beleuchtungseinrichtung für die Markierungsträger angeordnet sein. Diese kann ständig oder nur dann eingeschaltet sein, wenn sich der Markierungsträger in der Nähe befindet.

Anhand der Zeichnung ist die Erfindung weiter erläutert. Es zeigt
- Fig. 1: eine Vorrichtung gemäß der Erfindung in schematischer Darstellung,
- Fig. 2: einen Ausschnitt aus Fig. 1 und
- Fig. 3: ein Detail der Vorrichtung von Fig. 1 und 2.

Im Rahmen einer Fertigungseinrichtung für ein Fahrzeug befindet sich eine Karosserie 1 auf einem Aufnehmer 2. Der Aufnehmer wird längs einer Bewegungsbahn mittels eines Fördermittels, beispielsweise eines Kettenförderers 3 in Richtung eines Pfeils 4 bewegt. Die mechanische Verbindung zwischen dem Aufnehmer 2 und dem Kettenförderer 3 stellen Traversen 4 her, die am Boden des Aufnehmers 2 angeordnet sind.

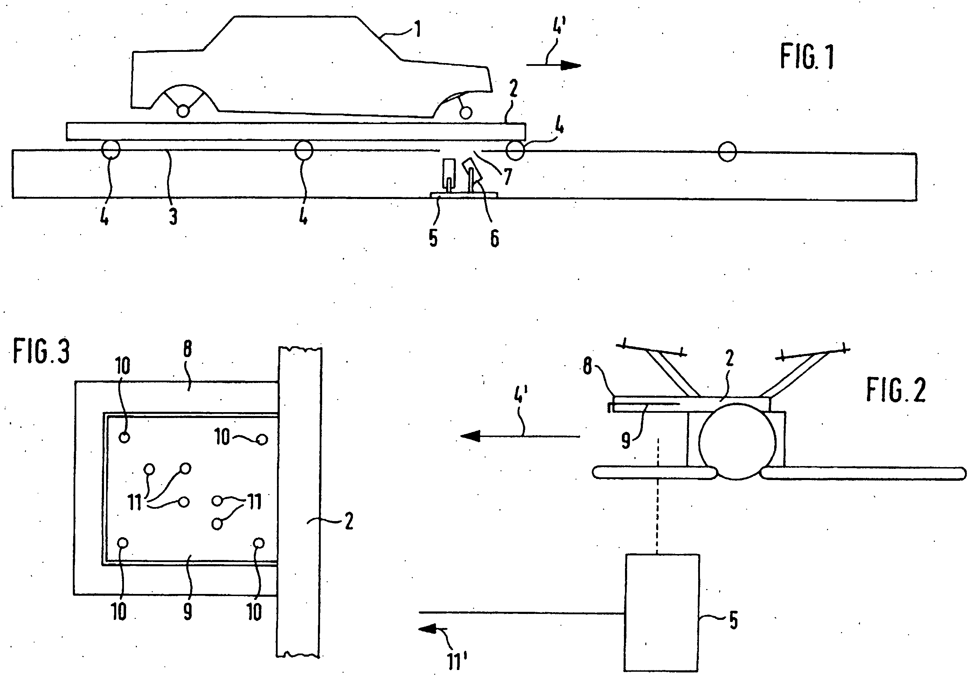

Im Boden der Bewegungsbahn befindet sich eine Kamera 5 als Leseeinrichtung sowie eine zugeordnete Beleuchtungseinrichtung 6, die beide auf die Unterseite des Aufnehmers 2 ausgerichtet sind. Im Boden der Förderbahn befindet sich ferner ein Glasausschnitt 7, über den eine optische Verbindung zwischen der Kamera 5 und einem Markierungsträger (Fig. 2 und 3) möglich ist.

Wie in Figur 2 im einzelnen gezeigt, befindet sich an der Stirnseite des Aufnehmers 2 eine Halterung 8 (vgl. Fig. 3), in der sich ein Markierungsträger in Form eines mit einem Lochcode versehenen Blechs 9 befindet. Der Lochcode besteht aus vier Löchern an den Eckpunkten sowie Löchern 11, die innerhalb der durch die Löcher 10 gebildeten Fläche angeordnet sind und einen Code bestimmen. Dieser wird mit Hilfe der Kamera 5 aufgenommen und über ein nachgeschaltetes Decodiersystem in einem Rechner 11' in eine vierstellige Zahl umgewandelt. Diese Zahl ist im Rahmen der Fertigung einmalig und charakterisiert den Markierungsträger 9, durch den eine Identifizierung der auf dem Aufnehmer 2 befestigten Karosserie möglich ist.

Überfährt der Aufnehmer 2 den Glasausschnitt 7, so wird mit Hilfe der Kamera 5 das im Markierungsträger 9 enthaltene Lochmuster aufgenommen und über die Decodiereinrichtung 11 in die vierstelligen Zahlenfolge (Ident-Zahl) umgewandelt. Ein nachgeschalteter Rechner zur Fertigungssteuerung ordnet bei der erstmaligen Ablesung in einer Leseeinrichtung, wie sie in Fig. 1 dargestellt ist, Fertigungsdaten der Ident-Zahl zu. Bei jeder folgenden Ablesung des Markierungsträgers 9 mit sich in der Bewegungsbahn anschließenden Leseeinrichtungen analog Fig. 1 erkennt der Rechner, wo sich die jeweilige Fahrzeugkarosserie gerade befindet und kann entsprechende Steuerungsmaßnahmen, beispielsweise der Bewegungsbahn des Aufnehmers 2 veranlassen. Es ist damit jederzeit möglich, die exakte Lage der Karosserie 1 festzustellen.

Die Halterung 8 ist starr mit dem Aufnehmer 2 verbunden. Im Rahmen der Fertigung wird sie denselben Behandlungsvorgängen wie der Aufnehmer 2 unterworfen. Aufgrund ihrer Robustheit und Unempfindlichkeit unterliegt der Markierungsträger 9 keinerlei Verschleiß. Gleichzeitig ist dafür keinerlei gesonderte Handhabung erforderlich, da er sich unverlierbar am Aufnehmer 2 befindet. Damit ergibt sich eine Vorrichtung zum Identifizieren von Objekten, hier dargestellt Fahrzeugkarosserien, die einen mechanisch besonders einfachen Aufbau besitzen und die verschleißfrei auch über längere Produktionszeiten verwendbar sind. Eine gesonderte Wartung ist nicht erforderlich. Anstelle der Verwendung im Rahmen der Fahrzeugherstellung ist es auch möglich, andere Objekte, die eine Fertigungsanlage mit einzelnen Bearbeitungsstationen durchlaufen wie beispielsweise, Fernseh-Farbbildschirme auf diese Weise zu identifizieren.

## Patentansprüche

1. Vorrichtung zum Identifizieren von Objekten, die auf einem Aufnehmer sitzen, die längs einer Förderbahn durch ein Fördermittel bewegt sind und die längs der Förderbahn verschiedene Bearbeitungsvorgange erfahren, mit einem Markierungsträger, der mit dem Objekt verbunden ist, und mit einer stationären Leseeinrichtung für den Markierungsträger,
**dadurch gekennzeichnet,**
**dass** der Markierungsträger (9) am Aufnehmer (8) befestigt, dass die Leseeinrichtung (5) im Boden der Förderbahn (3) angeordnet ist, und dass im Boden der Förderbahn ein Glasausschnitt (7) vorgesehen ist, über den eine optische Verbindung zwischen der Leseeinrichtung (5) und dem Markierungsträger (9) erfolgt.

2. Vorrichtung nach Anspruch 1, **dadurch gekennzeichnet, daß** die Leseeinrichtung eine Kamera (5) mit nachgeschalteter Bildverarbeitungseinrichtung (11) ist.

3. Vorrichtung nach Anspruch 1 oder 2, **dadurch gekennzeichnet, daß** der Markierungsträger (9) ein mit einem Lochcode (10, 11) versehenes Blech (5) ist.

4. Vorrichtung nach einem der Ansprüche 1 bis 3, **dadurch gekennzeichnet, daß** im Boden der Förderbahn (3) zusätzlich eine Beleuchtungseinrichung (6) für den Markierungsträger (9) angeordnet ist.

## Claims

1. A device for identifying objects which are located on a holder, are moved along a conveyor line by a conveying means and undergo various processing steps along the conveyor line, comprising a marking carrier connected to the object, and comprising a fixed reading apparatus for the marking carrier, **characterised in that** the marking carrier (9) is fixed on the holder (8), **in that** the reading apparatus (5) is arranged in the base of the conveyor line (3), and **in that** a glass cutout (7) is provided in the base of the conveyor line, via which a visual connection is produced between the reading apparatus (5) and the marking carrier (9).

2. A device according to claim 1, **characterised in that** the reading apparatus is a camera (5) with a downstream image processing apparatus (11).

3. A device according to claim 1 or 2, **characterised in that** the marking carrier (9) is a metal sheet (5) provided with a punched code (10, 11).

4. A device according to any one of claims 1 to 3, **characterised in that** a lighting apparatus (6) for the marking carrier (9) is also arranged in the base of the conveyor line (3).

## Revendications

1. Dispositif d'identification d'objets présents sur un socle, qui sont déplacés le long d'une voie de convoyage à l'aide d'un moyen de convoyage et qui subissent le long de la voie de convoyage différents processus de traitement, comportant un porteur de marquage, qui est relié à l'objet, et comportant un dispositif de lecture fixe pour le porteur de marquage,
**caractérisé en ce que**
le porteur de marquage (9) est fixé au socle (2), le dispositif de lecture (5) est disposé dans le fond de la voie de convoyage (3) et, dans le fond de la voie de convoyage une découpe en verre (7) permet de réaliser une liaison optique entre le dispositif de lecture (5) et le porteur de marquage (9).

2. Dispositif selon la revendication 1,
**caractérisé en ce que**
le dispositif de lecture est une caméra (5) dotée d'un dispositif de traitement d'images (11) placé en aval.

3. Dispositif selon la revendication 1 ou 2,
**caractérisé en ce que**
le porteur de marquage (9) est une tôle pourvue d'un code à trous (10, 11).

4. Dispositif selon l'une des revendications 1 à 3,
**caractérisé en ce que**
dans le fond de la voie de convoyage (3) est en outre disposé un dispositif d'éclairage (6) pour le porteur de marquage (9).
